(19) Europäisches Patentamt / European Patent Office / Office européen des brevets

(11) **EP 4 152 299 A1**

(12) **EUROPEAN PATENT APPLICATION**

(43) Date of publication:
**22.03.2023 Bulletin 2023/12**

(21) Application number: **22181807.3**

(22) Date of filing: **29.06.2022**

(51) International Patent Classification (IPC):
**G09C 1/00** *(2006.01)* **H04L 9/06** *(2006.01)*
**H04L 9/32** *(2006.01)*

(52) Cooperative Patent Classification (CPC):
**H04L 9/3242; G09C 1/00; H04L 9/0643;**
H04L 2209/12

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2021 US 202117480536**

(71) Applicant: **INTEL Corporation**
**Santa Clara, CA 95054 (US)**

(72) Inventor: **GHOSH, Santosh**
**Hillsboro, 97124 (US)**

(74) Representative: **Viering, Jentschura & Partner mbB**
**Patent- und Rechtsanwälte**
**Am Brauhaus 8**
**01099 Dresden (DE)**

(54) **POST-QUANTUM SECURE LIGHTEIGHT INTEGRITY AND REPLAY PROTECTION FOR MULTI-DIE CONNECTIONS**

(57)    An apparatus includes a first integrated circuit disposed on a first die, a second integrated circuit disposed on a second die, an interconnect to provide a communication connection between the first die and the second die. The first die comprises a processing circuitry to generate a first message authentication code (MAC) tag using a first message data to be communicated from the first die to the second die and a first cryptographic key, and transmit the first message data and the first MAC tag to the second die via the interconnect.

FIG. 3

EP 4 152 299 A1

**Description**

BACKGROUND OF THE DESCRIPTION

Semiconductor devices are increasingly being manufactured in the form of a package which includes multiple different integrated circuits disposed on multiple dies that are communicatively coupled by an interconnect structure. Signal transmission on the interconnect structure may present a security risk for such semiconductor package devices.

BRIEF DESCRIPTION OF THE DRAWINGS

So that the manner in which the above recited features can be understood in detail, a more particular description, briefly summarized above, may be had by reference to embodiments, some of which are illustrated in the appended drawings. It is to be noted, however, that the appended drawings illustrate only typical embodiments and are therefore not to be considered limiting of its scope, for this disclosure may admit to other equally effective embodiments.

Fig. 1 is a schematic illustration of a semiconductor device, according to embodiments.

Fig. 2 is a schematic illustration of a semiconductor device, according to embodiments.

Fig. 3 is a schematic illustration of components of an integrity and replay protection circuitry, according to embodiments.

Fig. 4 is a schematic illustration of a cryptographic permutation, according to embodiments.

Fig. 5 is a flowchart illustrating operations in a method to implement integrity and replay protection, according to embodiments.

Fig. 6 is a flowchart illustrating operations in a method to implement integrity and replay protection, according to embodiments.

Figs. 7A-7B are schematic illustrations of a cryptographic permutation, according to embodiments.

Figs. 8A-8B are schematic illustrations of a cryptographic permutation, according to embodiments.

Fig. 9 is a chart illustrating various design options of an integrity and replay protection circuitry, according to embodiments.

Fig. 10 is a schematic illustration of an electronic device which may be adapted to implement integrity and replay protection circuitry, according to embodiments.

DETAILED DESCRIPTION

In the following description, numerous specific details are set forth to provide a more thorough understanding of various embodiments. However, it will be apparent to one of skill in the art that various embodiments may be practiced without one or more of these specific details. In other instances, well-known features have not been described in order to avoid obscuring any of the embodiments.
References to "one embodiment", "an embodiment", "example embodiment", "various embodiments", etc., indicate that the embodiments) so described may include particular features, structures, or characteristics, but not every embodiment necessarily includes the particular features, structures, or characteristics. Further, some embodiments may have some, all, or none of the features described for other embodiments.
In the following description and claims, the term "coupled" along with its derivatives, may be used. "Coupled" is used to indicate that two or more elements cooperate or interact with each other, but they may or may not have intervening physical or electrical components between them.
As used in the claims, unless otherwise specified, the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.
Certain of the figures below detail example architectures and systems to implement embodiments of the above.

In some embodiments, one or more hardware components and/or instructions described above are emulated as detailed below or implemented as software modules.

The following detailed description is, therefore, not to be taken in a limiting sense, and the scope of the embodiments is defined only by the appended claims, appropriately interpreted, along with the full range of equivalents to which the claims are entitled. In the drawings, like numerals may refer to the same or similar functionality throughout the several views. The terms "over", "to", "between" and "on" as used herein may refer to a relative position of one layer with respect to other layers. One layer "over" or "on" another layer or bonded "to" another layer may be directly in contact with the other layer or may have one or more intervening layers. One layer "between" layers may be directly in contact with the layers or may have one or more intervening layers. Layers and/or structures "adjacent" to one another may or may not have intervening structures/layers between them. A layer(s)/structure(s) that is/are directly on/directly in contact with another layer(s)/structure(s) may have no intervening layer(s)/structure(s) between them.

Various implementations of the embodiments herein may be formed or carried out on a substrate, such as a package substrate. A package substrate may comprise any suitable type of substrate capable of providing electrical communications between a die, such as an integrated circuit (IC) die, and a next-level component to which an IC package may be coupled (e.g., a circuit board). In another embodiment, the substrate may comprise any suitable type of substrate capable of providing electrical communication between an IC die and an upper IC package coupled with a lower IC/die package, and in a further embodiment a substrate may comprise any suitable type of substrate capable of providing electrical communication between an upper IC package and a next-level component to which an IC package is coupled.

A substrate may also provide structural support for a die. By way of example, in one embodiment, a substrate may comprise a multi-layer substrate - including alternating layers of a dielectric material and metal - built-up around a core layer (either a dielectric or a metal core). In another embodiment, a substrate may comprise a coreless multi-layer substrate. Other types of substrates and substrate materials may also find use with the disclosed embodiments (e.g., ceramics, sapphire, glass, etc.). Further, according to one embodiment, a substrate may comprise alternating layers of dielectric material and metal that are built-up over a die itself - this process is sometimes referred to as a "bumpless build-up process." Where such an approach is utilized, conductive interconnects may or may not be needed (as the build-up layers may be disposed directly over a die, in some cases).

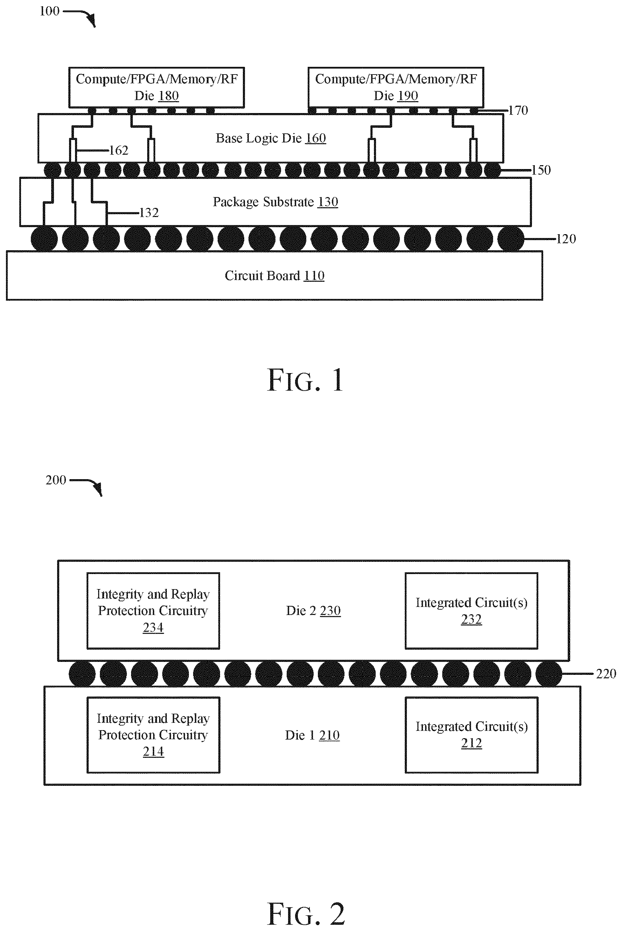

Fig. 1 is a schematic illustration of a semiconductor device 100, according to embodiments. Referring to Fig. 1, in some examples a semiconductor package 100 may comprise a substrate 130 which may be mounted on a circuit board 110 via a first conductive structure 120, which provides electrical connections with the circuit board 110. Substrate 130 may comprise a second conductive structure 150 to provide electrical connections with a base logic die 160. Base logic die 160 may, in turn, comprise a third conductive structure 170 to provide electrical connections with one or more dies 180, 190 that comprise integrated circuits for specialized functions.

The conductive structures 120, 150, 170 may comprise any type of structure and materials capable of providing electrical and/or optical communication interconnect between the respective components to which the conductive structures 120, 150, 170 are coupled. Thus, conductive structure 120 provides an interconnect between circuit board 110 and substrate 130. Similarly, conductive structure 150 provides an interconnect between substrate 130 and base logic die 160 and conductive structure 170 provides an interconnect between base logic die and one or more dies 170, 190.

In some embodiments, each of the conductive structures 120, 150, 170 comprises an electrically conductive terminal (e.g., a pad, bump, stud bump, column, pillar, or other suitable structure or combination of structures) on a first component (e.g., circuit board 110, substrate 130, or dies 160, 180, 190) and a corresponding electrically conductive terminal (e.g., a pad, bump, stud bump, column, pillar, or other suitable structure or combination of structures) on a second component (e.g., circuit board 110, substrate 130, or dies 160, 180, 190). Solder (e.g., in the form of balls or bumps) may be disposed on the terminals of the components, and these terminals may then be joined using a solder reflow process. Of course, it should be understood that many other types of interconnects and materials are possible (e.g., wirebonds extending between the respective components). In further embodiments one or more of the conductive structures 120, 150, 170 may comprise a Foveros or an Embedded Multi-Die Interconnect Bridge (EMIB).

Substrate 130 may comprise one or more electrical traces 132 (e.g., vias) extending through the substrate 130 to provide electrical connections between elements of the first conductive structure 120 and the second conductive structure 150. Similarly, base logic die 160 may comprise one or more electrical traces 162 (e.g., vias) to provide electrical connections between elements of the second conductive structure 150 and the third conductive structure 170. Thus, electrical communication is enabled between all layers of the package 100.

Base logic die 160 may comprise active circuitry relevant for the full operation of the main compute processors found in the top piece of silicon. For example, base logic die 160 may comprise circuitry to perform security operations, debug operations, input/output (I/O) operations, and other functions. Dies 180 and 190 may comprise integrated circuits that perform compute functions, a field programmable gate array (FPGA), computer readable memory, radio frequency circuits, and the like.

In accordance with aspects described herein, a processing circuitry to implement data integrity may be integrated on electronic integrated circuit (IC). In some examples the processing circuitry may also implement replay protection.

The processing circuitry may be communicatively coupled to an interconnect that provides a communication channel between a first die and a second die in a semiconductor package.

Fig. 2 is a schematic illustration of a semiconductor device 200, according to embodiments. Referring to Fig. 2, in some examples a first die 210 comprises one or more integrated circuits 212 and a second die 230 comprises one or more integrated circuits 232. First die is communicatively coupled to a second die 230 via a conductive structure 220, as described above with reference to Fig. 1. In the example depicted in Fig. 2, the first die 210 comprises an integrity and replay protection circuitry module 214. Similarly, the second die 230 comprises an integrity and replay protection circuitry module 234.

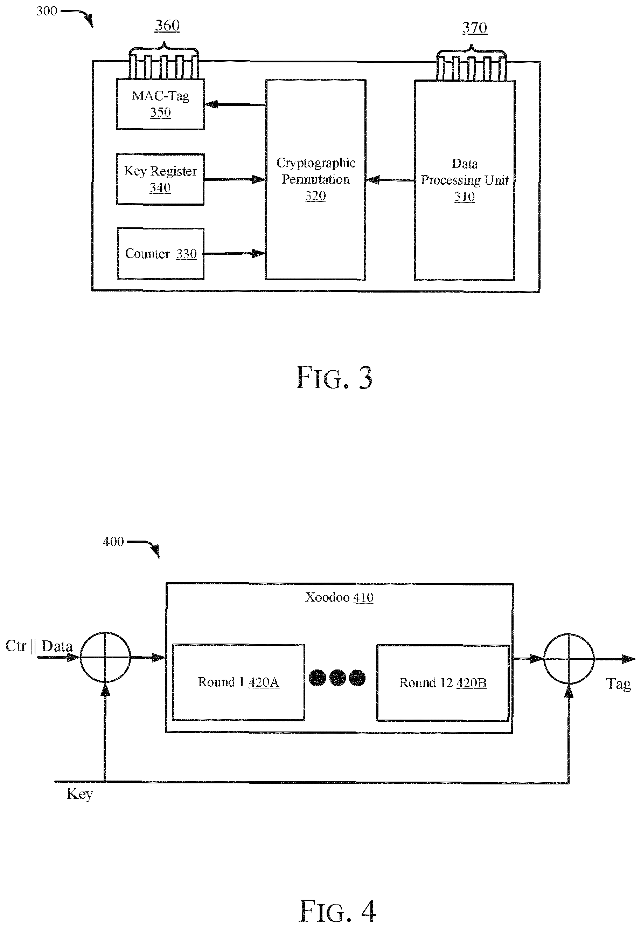

Fig. 3 is a schematic illustration of components of an integrity and replay protection circuitry 300, according to embodiments. In some embodiments integrity and replay circuitry 300 comprises a data processing unit 310, a cryptographic permutation 320, a counter circuitry 330, a key register 340, and a message authentication code (MAC) tag register 350. In some embodiments the MAC tag register 350 is communicatively coupled to a first set of microbumps 360 which provide a communication connection to transmit a MAC tag and the data processing unit 310 is communicatively coupled to a second set of microbumps 370 which provide a communication connection to transmit message data.

Fig. 4 is a schematic illustration of a cryptographic permutation 400, according to embodiments. The cryptographic permutation 400 depicted in Fig. 4 may, some examples, be used to implement the cryptographic permutation 320 depicted in Fig. 3. Referring to Fig. 4, in some examples the cryptographic permutation 400 may comprise a Xoodoo module 410. Xoodoo module 410 implements a set of 384-bit cryptographic permutations parameterized by their round count. The round function works on 12 words of 32 bits. In the embodiment depicted in Fig. 4, the Xoodoo module 410 includes twelve (12) rounds indicated in the figure by round 1 420A through round 12 420B.

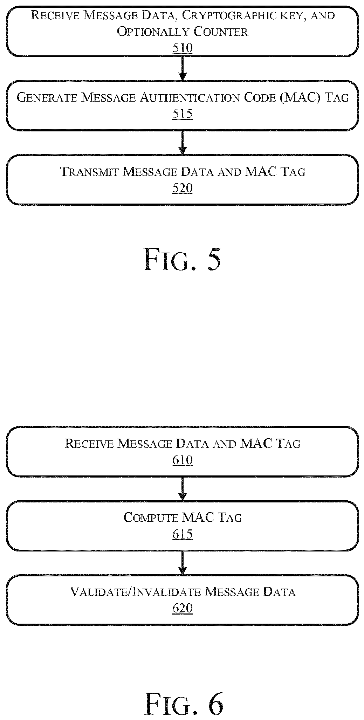

Fig. 5 is a flowchart illustrating operations in a method to implement integrity and replay protection, according to embodiments At operation 510, the Xoodoo module 410 receives message data (e.g., from data processing unit 310), a 384 bit cryptographic key *k* (e.g., from key register 340, and optionally a counter (e.g., from counter register 330), and performs twelve Xoodoo rounds to generate (operation 510) a message authentication code (MAC) tag according to the formula:

$$\text{EQ 1:} \qquad \text{Tag} = k^\wedge \text{Xoodoo}(k^\wedge(\text{counter} \| \text{data}))$$

At operation 520 the message data and the MAC tag generated in operation 515 may be transmitted from the integrity and replay protection circuitry 300 to another device, e.g., via one of the conductive structures 120, 150, 170. In some examples the MAC tag is transmitted via the first set of microbumps 360 and the message data is transmitted via the second set of microbumps 370.

In some examples the integrity and replay protection circuitry performs inverse operation on message data and an associated MAC tag received from a remote device in order to authenticate the data. Fig. 6 is a flowchart illustrating operations in a method to implement integrity and replay protection, according to embodiments. Referring to Fig. 6, at operation 610 the integrity and replay protection circuitry 300 receives message data and an associated MAC tag generated by the remote device. In some examples the MAC tag is received via the first set of microbumps 360 and the message data may be received via the second set of microbumps 370. At operation 615 the integrity and replay protection circuitry 300 computes a MAC code from the received message data and a cryptographic key associated with the remote device. At operation 620 the integrity and replay protection circuitry 300 validates the message data when the MAC tag computed in operation 615 matches the MAC tag received in operation 610. Alternatively, the replay protection circuitry 300 invalidates the message data when the MAC tag computed in operation 615 does not match the MAC tag received in operation 610.

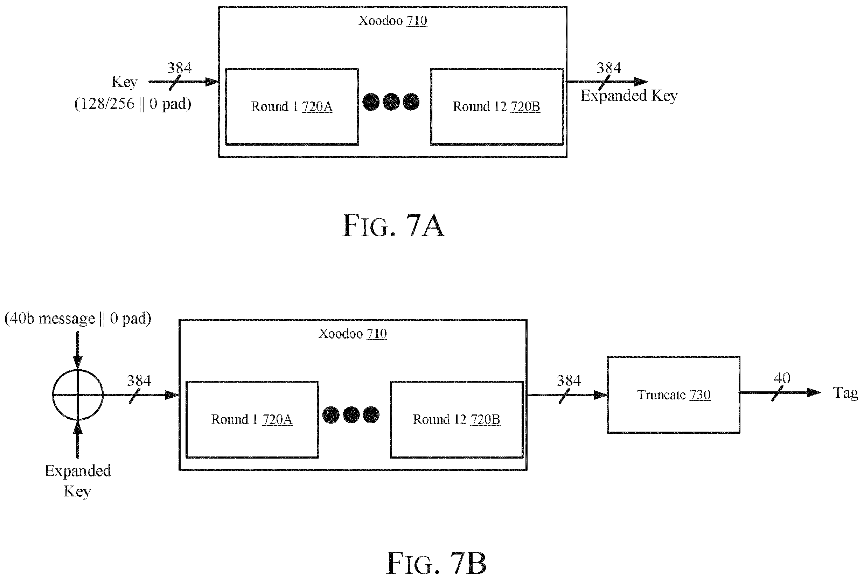

Figs. 7A-7B are schematic illustrations of a cryptographic permutation, according to embodiments. In the example depicted in Figs. 7A-7B a 40-bit unit message and a 40 bit MAC tag are used. The interconnect provides a data bandwith of 8bits/cycle. Thus, a 40 bit message requires five (5) cycles to process the 40 bit message. The Xoodoo engine depicted in Fig. 7A receives a 384 bit and generates a 384 bit expanded key.

The Xoodoo engine 710 depicted in Fig. 7B receives a 40 bit message and an expanded key and generates a 384 bit MAC tag. In some examples the MAC tag may be input to a truncator 730 which truncates the tag to a 40 bit tag. The truncator may truncate either the most significant bits or the least significant bits. The required latency of the Xoodoo engine depicted in Fig. 7B is less than 5 cycles and the required bandwidth of the tag interconnect is 8 bits/cycle.

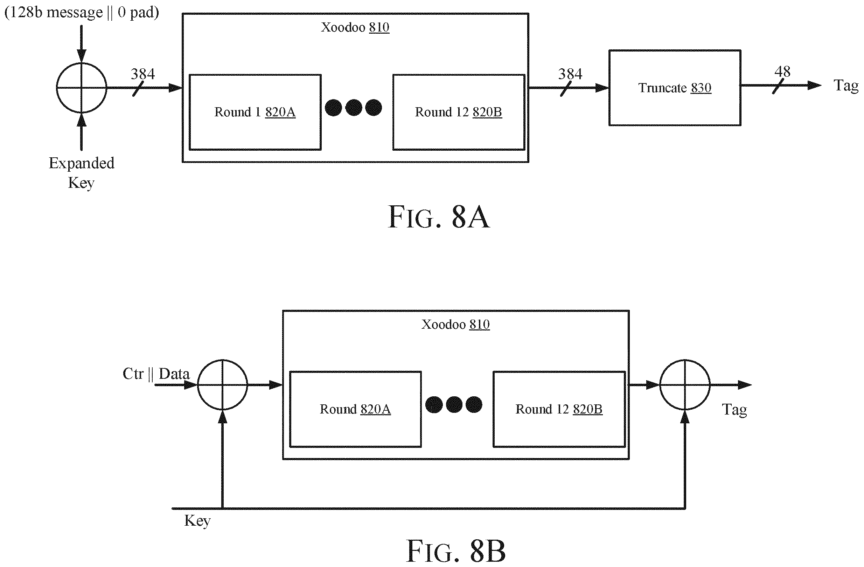

Figs. 8A-8B are schematic illustrations of a cryptographic permutation, according to embodiments. In the example depicted in Figs. 8A-8B a 128 bit unit message and a 48 bit MAC tag are used. The interconnect provides a data bandwith of 8bits/cycle. Thus, a 128 bit message requires sixteen (16) cycles to process the 128 bit message. The Xoodoo engine 810 depicted in Fig. 8A receives a 128 bit message and an expanded key and generates a 384 bit MAC tag. In some examples the MAC tag may be input to a truncator 830 which truncates the tag to a 48 bit tag. The truncator may truncate either the most significant bits or the least significant bits.

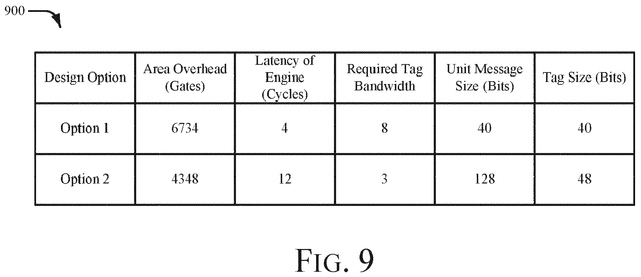

Given an 8 bit data bandwith, a 128 bit message requires 16 cycles to process. Thus, the required latency of the Xoodoo engine depicted in Fig. 8B is less than sixteen (16) cycles and the required bandwidth of the tag interconnect is 3 bits/cycle. These two design options are summarized in the table 900 depicted in Fig. 9.

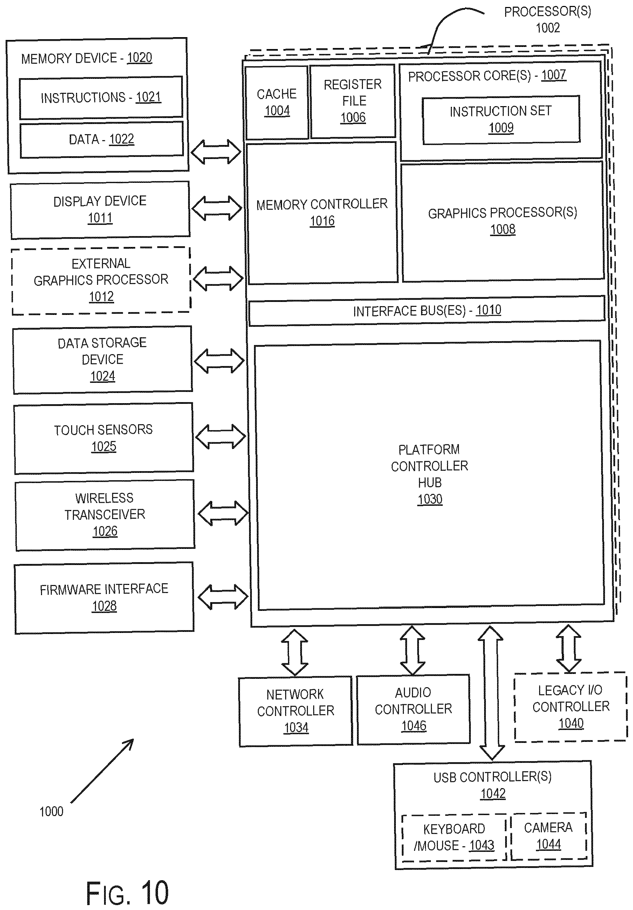

Fig. 10 is a schematic illustration of an electronic device which may be adapted to implement an IP independent secure firmware load, according to embodiments. In various embodiments, the computing architecture 1000 may comprise or be implemented as part of an electronic device. In some embodiments, the computing architecture 1000 may be representative, for example of a computer system that implements one or more components of the operating environments described above. In some embodiments, computing architecture 1000 may be representative of one or more portions or components of a DNN training system that implement one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 1000. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bidirectional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 1000 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 1000.

As shown in Figure 10, the computing architecture 1000 includes one or more processors 1002 and one or more graphics processors 1008, and may be a single processor desktop system, a multiprocessor workstation system, or a server system having a large number of processors 1002 or processor cores 1007. In on embodiment, the system 1000 is a processing platform incorporated within a system-on-a-chip (SoC or SOC) integrated circuit for use in mobile, handheld, or embedded devices.

An embodiment of system 1000 can include, or be incorporated within a server-based gaming platform, a game console, including a game and media console, a mobile gaming console, a handheld game console, or an online game console. In some embodiments system 1000 is a mobile phone, smart phone, tablet computing device or mobile Internet device. Data processing system 1000 can also include, couple with, or be integrated within a wearable device, such as a smart watch wearable device, smart eyewear device, augmented reality device, or virtual reality device. In some embodiments, data processing system 1000 is a television or set top box device having one or more processors 1002 and a graphical interface generated by one or more graphics processors 1008.

In some embodiments, the one or more processors 1002 each include one or more processor cores 1007 to process instructions which, when executed, perform operations for system and user software. In some embodiments, each of the one or more processor cores 1007 is configured to process a specific instruction set 1009. In some embodiments, instruction set 1009 may facilitate Complex Instruction Set Computing (CISC), Reduced Instruction Set Computing (RISC), or computing via a Very Long Instruction Word (VLIW). Multiple processor cores 1007 may each process a different instruction set 1009, which may include instructions to facilitate the emulation of other instruction sets. Processor core 1007 may also include other processing devices, such a Digital Signal Processor (DSP).

In some embodiments, the processor 1002 includes cache memory 1004. Depending on the architecture, the processor 1002 can have a single internal cache or multiple levels of internal cache. In some embodiments, the cache memory is shared among various components of the processor 1002. In some embodiments, the processor 1002 also uses an external cache (e.g., a Level-3 (L3) cache or Last Level Cache (LLC)) (not shown), which may be shared among processor cores 1007 using known cache coherency techniques. A register file 1006 is additionally included in processor 1002 which may include different types of registers for storing different types of data (e.g., integer registers, floating point registers, status registers, and an instruction pointer register). Some registers may be general-purpose registers, while other registers may be specific to the design of the processor 1002.

In some embodiments, one or more processor(s) 1002 are coupled with one or more interface bus(es) 1010 to transmit communication signals such as address, data, or control signals between processor 1002 and other components in the system. The interface bus 1010, in one embodiment, can be a processor bus, such as a version of the Direct Media Interface (DMI) bus. However, processor busses are not limited to the DMI bus, and may include one or more Peripheral Component Interconnect buses (e.g., PCI, PCI Express), memory busses, or other types of interface busses. In one embodiment the processor(s) 1002 include an integrated memory controller 1016 and a platform controller hub 1030. The memory controller 1016 facilitates communication between a memory device and other components of the system 1000, while the platform controller hub (PCH) 1030 provides connections to I/O devices via a local I/O bus.

Memory device 1020 can be a dynamic random-access memory (DRAM) device, a static random-access memory (SRAM) device, flash memory device, phase-change memory device, or some other memory device having suitable performance to serve as process memory. In one embodiment the memory device 1020 can operate as system memory for the system 1000, to store data 1022 and instructions 1021 for use when the one or more processors 1002 executes an application or process. Memory controller hub 1016 also couples with an optional external graphics processor 1012, which may communicate with the one or more graphics processors 1008 in processors 1002 to perform graphics and media operations. In some embodiments a display device 1011 can connect to the processor(s) 1002. The display device 1011 can be one or more of an internal display device, as in a mobile electronic device or a laptop device or an external display device attached via a display interface (e.g., DisplayPort, etc.). In one embodiment the display device 1011 can be a head mounted display (HMD) such as a stereoscopic display device for use in virtual reality (VR) applications or augmented reality (AR) applications.

In some embodiments the platform controller hub 1030 enables peripherals to connect to memory device 1020 and processor 1002 via a high-speed I/O bus. The I/O peripherals include, but are not limited to, an audio controller 1046, a network controller 1034, a firmware interface 1028, a wireless transceiver 1026, touch sensors 1025, a data storage device 1024 (e.g., hard disk drive, flash memory, etc.). The data storage device 1024 can connect via a storage interface (e.g., SATA) or via a peripheral bus, such as a Peripheral Component Interconnect bus (e.g., PCI, PCI Express). The touch sensors 1025 can include touch screen sensors, pressure sensors, or fingerprint sensors. The wireless transceiver 1026 can be a Wi-Fi transceiver, a Bluetooth transceiver, or a mobile network transceiver such as a 3G, 4G, or Long Term Evolution (LTE) transceiver. The firmware interface 1028 enables communication with system firmware, and can be, for example, a unified extensible firmware interface (UEFI). The network controller 1034 can enable a network connection to a wired network. In some embodiments, a high-performance network controller (not shown) couples with the interface bus 1010. The audio controller 1046, in one embodiment, is a multi-channel high definition audio controller. In one embodiment the system 1000 includes an optional legacy I/O controller 1040 for coupling legacy (e.g., Personal System 2 (PS/2)) devices to the system. The platform controller hub 1030 can also connect to one or more Universal Serial Bus (USB) controllers 1042 connect input devices, such as keyboard and mouse 1043 combinations, a camera 1044, or other USB input devices.

Embodiments may be provided, for example, as a computer program product which may include one or more machine-readable media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

Moreover, embodiments may be downloaded as a computer program product, wherein the program may be transferred from a remote computer (e.g., a server) to a requesting computer (e.g., a client) by way of one or more data signals embodied in and/or modulated by a carrier wave or other propagation medium via a communication link (e.g., a modem and/or network connection).

Throughout the document, term "user" may be interchangeably referred to as "viewer", "observer", "speaker", "person", "individual", "end-user", and/or the like. It is to be noted that throughout this document, terms like "graphics domain" may be referenced interchangeably with "graphics processing unit", "graphics processor", or simply "GPU" and similarly, "CPU domain" or "host domain" may be referenced interchangeably with "computer processing unit", "application processor", or simply "CPU".

It is to be noted that terms like "node", "computing node", "server", "server device", "cloud computer", "cloud server", "cloud server computer", "machine", "host machine", "device", "computing device", "computer", "computing system", and the like, may be used interchangeably throughout this document. It is to be further noted that terms like "application", "software application", "program", "software program", "package", "software package", and the like, may be used interchangeably throughout this document. Also, terms like "job", "input", "request", "message", and the like, may be used interchangeably throughout this document.

In various implementations, the computing device may be a laptop, a netbook, a notebook, an ultrabook, a smartphone, a tablet, a personal digital assistant (PDA), an ultra mobile PC, a mobile phone, a desktop computer, a server, a set-top box, an entertainment control unit, a digital camera, a portable music player, or a digital video recorder. The computing device may be fixed, portable, or wearable. In further implementations, the computing device may be any other electronic device that processes data or records data for processing elsewhere.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Embodiments may be provided, for example, as a computer program product which may include one or more transitory or non-transitory machine-readable storage media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

Some embodiments pertain to Example 1 that includes an apparatus comprising a first die comprising a first integrated circuit; a second die comprising a second integrated circuit; an interconnect to provide a communication connection between the first die and the second die; the first die comprising a processing circuitry to generate a first message authentication code (MAC) tag using a first message data to be communicated from the first die to the second die and a first cryptographic key; and transmit the first message data and the first MAC tag to the second die via the interconnect.

Example 2 includes the subject matter of Example 1, wherein the first die comprises a base logic integrated circuit.

Example 3 includes the subject matter of Examples 1 and 2, wherein the second die comprises at least one of a compute module; a field programmable gate array (FPGA); a computer-readable memory; or a radio frequency (RF) circuit.

Example 4 includes the subject matter of Examples 1-3, wherein the interconnect comprises a plurality of microbumps formed from an electrically conductive material.

Example 5 includes the subject matter of Examples 1-4, wherein the interconnect comprises a first set of microbumps communicatively coupled to the processing circuitry to transmit the first MAC tag; and a second set of microbumps communicatively coupled to a data processing unit to transmit the first message data.

Example 6 includes the subject matter of Examples 1-5, wherein the processing circuitry implements a lightweight cryptographic permutation.

Example 7 includes the subject matter of Examples 1-6, the processing circuitry to generate a message authentication code (MAC) tag using the first message data to be communicated from the first die to the second die, the first cryptographic key, and a counter.

Example 8 includes the subject matter of Examples 1-7, the processing circuitry to receive, from the second die, a second message data and a second message authentication code (MAC) tag; and authenticate the second message data using the second MAC tag.

Example 9 includes the subject matter of Examples 1-8, the processing circuitry to compute a third message authentication code MAC tag from the second message data and a second cryptographic key associated with the second die; and validate the second message data when the third message authentication code MAC tag matches the second message authentication code (MAC) tag.

Example 10 includes the subject matter of Examples 8 and 9, the processing circuitry to compute a third message authentication code MAC tag from the second message data and a second cryptographic key associated with the second die; and invalidate the second message data when the third message authentication code MAC tag does not match the second message authentication code (MAC) tag.

Some embodiments pertain to Example 11 that includes a semiconductor package comprising; a substrate communicatively coupled to a printed circuit board; a first die comprising a first integrated circuit disposed on the substrate; a second die comprising a second integrated circuit; a second integrated circuit disposed on a second die; an interconnect to provide a communication connection between the first die and the second die; the first die comprising a processing circuitry to generate a first message authentication code (MAC) tag using a first message data to be communicated from the first die to the second die and a first cryptographic key; and transmit the first message data and the first MAC tag to the second die via the interconnect.

Example 12 includes the subject matter of Example 11, wherein the first die comprises a base logic integrated circuit.

Example 13 includes the subject matter of Examples 11-12, wherein the second die comprises at least one of a compute module; a field programmable gate array (FPGA); a computer-readable memory; or a radio frequency (RF) circuit.

Example 14 includes the subject matter of Examples 11-13, wherein the interconnect comprises a plurality of microbumps formed from an electrically conductive material.

Example 15 includes the subject matter of Examples 11-14, wherein the interconnect comprises a first set of microbumps communicatively coupled to the processing circuitry to transmit the first MAC tag; and a second set of microbumps communicatively coupled to a data processing unit to transmit the first message data.

Example 16 includes the subject matter of Examples 11-15, wherein the processing circuitry implements a lightweight cryptographic permutation.

Example 17 includes the subject matter of Examples 11-16, the processing circuitry to generate a message authentication code (MAC) tag using the first message data to be communicated from the first die to the second die, the first cryptographic key, and a counter.

Example 18 includes the subject matter of Examples 11-17, further comprising instruction which, when executed by processor, cause the processor to receive, from the second die, a second message data and a second message authentication code (MAC) tag; and authenticate the second message data using the second MAC tag.

Example 19 includes the subject matter of Examples 11-18, the processing circuitry to compute a third message authentication code MAC tag from the second message data and a second cryptographic key associated with the second die; and validate the second message data when the third message authentication code MAC tag matches the second message authentication code (MAC) tag,

Example 20 includes the subject matter of Examples 11-19, the processing circuitry to compute a third message authentication code MAC tag from the second message data and a second cryptographic key associated with the second die; and invalidate the second message data when the third message authentication code MAC tag does not match the second message authentication code (MAC) tag.

The details above have been provided with reference to specific embodiments. Persons skilled in the art, however, will understand that various modifications and changes may be made thereto without departing from the broader spirit and scope of any of the embodiments as set forth in the appended claims. The foregoing description and drawings are, accordingly, to be regarded in an illustrative rather than a restrictive sense.

**Claims**

1. An apparatus comprising:

    a first die comprising a first integrated circuit;
    a second die comprising a second integrated circuit;
    an interconnect to provide a communication connection between the first die and the second die;
    the first die comprising a processing circuitry to:

        generate a first message authentication code (MAC) tag using a first message data to be communicated from the first die to the second die and a first cryptographic key; and
        transmit the first message data and the first MAC tag to the second die via the interconnect.

2. The apparatus of claim 1, wherein the first die comprises a base logic integrated circuit.

3. The apparatus of any one of claims 1-2, wherein the second die comprises at least one of:

    a compute module;
    a field programmable gate array (FPGA);
    a computer-readable memory; or
    a radio frequency (RF) circuit.

4. The apparatus of any one of claims 1-3, wherein the interconnect comprises a plurality of microbumps formed from an electrically conductive material.

5. The apparatus of any one of claims 1-4, wherein the interconnect comprises:

a first set of microbumps communicatively coupled to the processing circuitry to transmit the first MAC tag; and
a second set of microbumps communicatively coupled to a data processing unit to transmit the first message data.

6. The apparatus of any one of claims 1-5, wherein the processing circuitry implements a lightweight cryptographic permutation.

7. The apparatus of any one of claims 1-6, the processing circuitry to:
generate a message authentication code (MAC) tag using the first message data to be communicated from the first die to the second die, the first cryptographic key, and a counter.

8. The apparatus of any one of claims 1-7, the processing circuitry to:

receive, from the second die, a second message data and a second message authentication code (MAC) tag; and
authenticate the second message data using the second MAC tag.

9. The apparatus of any one of claims 1-8, the processing circuitry to:

compute a third message authentication code MAC tag from the second message data and a second cryptographic key associated with the second die; and
validate the second message data when the third message authentication code MAC tag matches the second message authentication code (MAC) tag.

10. The apparatus of any one of claims 1-2, the processing circuitry to:

compute a third message authentication code MAC tag from the second message data and a second cryptographic key associated with the second die; and
invalidate the second message data when the third message authentication code MAC tag does not match the second message authentication code (MAC) tag.

100 ⌐

| Compute/FPGA/Memory/RF Die 180 | | Compute/FPGA/Memory/RF Die 190 |

—170

Base Logic Die 160

—162

—150

Package Substrate 130

—132

—120

Circuit Board 110

FIG. 1

200 ⌐

| Integrity and Replay Protection Circuitry 234 | Die 2 230 | Integrated Circuit(s) 232 |

—220

| Integrity and Replay Protection Circuitry 214 | Die 1 210 | Integrated Circuit(s) 212 |

FIG. 2

300 —

360

370

MAC-Tag
350

Key Register
340

Counter 330

Cryptographic
Permutation
320

Data
Processing Unit
310

FIG. 3

400 —

Xoodoo 410

Ctr ‖ Data

Round 1 420A

● ● ●

Round 12 420B

Tag

Key

FIG. 4

RECEIVE MESSAGE DATA, CRYPTOGRAPHIC KEY, AND
OPTIONALLY COUNTER
510

GENERATE MESSAGE AUTHENTICATION CODE (MAC) TAG
515

TRANSMIT MESSAGE DATA AND MAC TAG
520

FIG. 5

RECEIVE MESSAGE DATA AND MAC TAG
610

COMPUTE MAC TAG
615

VALIDATE/INVALIDATE MESSAGE DATA
620

FIG. 6

Xoodoo 710

Key
(128/256 ‖ 0 pad) ──384──► | Round 1 720A ● ● ● Round 12 720B | ──384──► Expanded Key

FIG. 7A

(40b message ‖ 0 pad)

Xoodoo 710

Expanded Key ──384──► | Round 1 720A ● ● ● Round 12 720B | ──384──► Truncate 730 ──40──► Tag

FIG. 7B

(128b message || 0 pad)

Xoodoo 810

384

Round 1 820A ● ● ● Round 12 820B

384

Truncate 830

48

Tag

Expanded
Key

FIG. 8A

Ctr || Data

Xoodoo 810

Round 820A ● ● ● Round 12 820B

Tag

Key

FIG. 8B

EP 4 152 299 A1

900

| Design Option | Area Overhead (Gates) | Latency of Engine (Cycles) | Required Tag Bandwidth | Unit Message Size (Bits) | Tag Size (Bits) |
|---|---|---|---|---|---|
| Option 1 | 6734 | 4 | 8 | 40 | 40 |
| Option 2 | 4348 | 12 | 3 | 128 | 48 |

FIG. 9

PROCESSOR(S)
1002

MEMORY DEVICE - 1020

INSTRUCTIONS - 1021

DATA - 1022

CACHE
1004

REGISTER
FILE
1006

PROCESSOR CORE(S) - 1007

INSTRUCTION SET
1009

DISPLAY DEVICE
1011

MEMORY CONTROLLER
1016

GRAPHICS PROCESSOR(S)
1008

EXTERNAL
GRAPHICS PROCESSOR
1012

INTERFACE BUS(ES) - 1010

DATA STORAGE
DEVICE
1024

TOUCH SENSORS
1025

PLATFORM
CONTROLLER
HUB
1030

WIRELESS
TRANSCEIVER
1026

FIRMWARE INTERFACE
1028

NETWORK
CONTROLLER
1034

AUDIO
CONTROLLER
1046

LEGACY I/O
CONTROLLER
1040

USB CONTROLLER(S)
1042

KEYBOARD
/MOUSE - 1043

CAMERA
1044

1000

FIG. 10

Europäisches
Patentamt

European
Patent Office

Office européen
des brevets

# EUROPEAN SEARCH REPORT

Application Number

EP 22 18 1807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/311291 A1 (TROIA ALBERTO [DE] ET AL) 1 October 2020 (2020-10-01) | 1-3,8-10 | INV. G09C1/00 H04L9/06 H04L9/32 |
| Y | * abstract * <br> * figures 1-6,9,10 * <br> * paragraph [0038] – paragraph [0083] * <br> * paragraph [0091] – paragraph [0105] * <br> ----- | 4-7 | |
| Y | EP 3 682 471 A1 (CRYPTOGRAPHY RES INC [US]) 22 July 2020 (2020-07-22) <br> * figures 1,3,4 * <br> * paragraph [0013] – paragraph [0028] * <br> * paragraph [0037] – paragraph [0057] * <br> ----- | 4,5 | |
| Y | DAEMEN JOAN ET AL: "Xoodyak, a lightweight cryptographic scheme", IACR TRANSACTIONS ON SYMMETRIC CRYPTOLOGY, 17 May 2021 (2021-05-17), pages 1-31, XP093002918, DOI: 10.46586/tosc.v2020.iS1.60-87 Retrieved from the Internet: URL:https://csrc.nist.gov/CSRC/media/Projects/lightweight-cryptography/documents/finalist-round/updated-spec-doc/xoodyak-spec-final.pdf> [retrieved on 2022-11-29] <br> * paragraph [0001] – paragraph [0005] * <br> ----- | 6,7 | |
| A | US 2021/117246 A1 (LAL RESHMA [US] ET AL) 22 April 2021 (2021-04-22) <br> * figures 6A-6D,13-18 * <br> * paragraph [0141] – paragraph [0154] * <br> * paragraph [0212] – paragraph [0247] * <br> ----- <br> -/-- | 1-10 | |

TECHNICAL FIELDS
SEARCHED (IPC)

G09C
H04L

The present search report has been drawn up for all claims

| Place of search | Date of completion of the search | Examiner |
|---|---|---|
| Munich | 29 November 2022 | Bec, Thierry |

EPO FORM 1503 03.82 (P04C01)

Europäisches
Patentamt

European
Patent Office

Office européen
des brevets

**EUROPEAN SEARCH REPORT**

Application Number

EP 22 18 1807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | MELTEM SÖNMEZ TURAN ET AL: "Status report on the first round of the NIST lightweight cryptography standardization process NIST IR 8268", NIST, NATIONAL INSTITUTE OF STANDARDS AND TECHNOLOGY (NIST) , 7 October 2019 (2019-10-07), pages 1-19, XP061056268, DOI: 10.6028/NIST.IR.8268 Retrieved from the Internet: URL:https://nvlpubs.nist.gov/nistpubs/ir/2019/NIST.IR.8268.pdf [retrieved on 2019-10-31] * page 1 - page 7 * ----- | | |

TECHNICAL FIELDS
SEARCHED (IPC)

The present search report has been drawn up for all claims

| Place of search | Date of completion of the search | Examiner |
|---|---|---|
| Munich | 29 November 2022 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 1807

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2022

| Patent document cited in search report | Publication date | Patent family member(s) | Publication date |
|---|---|---|---|
| US 2020311291 A1 | 01-10-2020 | CN 111737769 A | 02-10-2020 |
| | | US 2020311291 A1 | 01-10-2020 |
| | | US 2022043921 A1 | 10-02-2022 |
| EP 3682471 A1 | 22-07-2020 | CN 111095534 A | 01-05-2020 |
| | | EP 3682471 A1 | 22-07-2020 |
| | | US 2021035924 A1 | 04-02-2021 |
| | | WO 2019055307 A1 | 21-03-2019 |
| US 2021117246 A1 | 22-04-2021 | DE 102021207514 A1 | 31-03-2022 |
| | | NL 2029026 A | 24-05-2022 |
| | | US 2021117246 A1 | 22-04-2021 |
| | | US 2022100579 A1 | 31-03-2022 |
| | | US 2022100580 A1 | 31-03-2022 |
| | | US 2022100581 A1 | 31-03-2022 |
| | | US 2022100582 A1 | 31-03-2022 |
| | | US 2022100583 A1 | 31-03-2022 |
| | | US 2022100584 A1 | 31-03-2022 |
| | | WO 2022066304 A1 | 31-03-2022 |

EPO FORM P0459

For more details about this annex : see Official Journal of the European Patent Office, No. 12/82